# EUROPEAN PATENT APPLICATION

(11) **EP 4 481 072 A1**
(43) Date of publication of application: **25.12.2024**
(21) Application number: 23756351.5
(22) Date of filing: 14.02.2023
(51) Int. Cl.: C22B 19/20, C22B 19/30, C22B 3/12, C22B 3/44, C22B 3/46

(54) **ZINC RECOVERY METHOD**

(30) Priority: 15.02.2022 JP 2022021364
(71) Applicant: Kinotech Corporation, Tokyo 103-0027 (JP); The University of Tokyo, Bunkyo-ku, Tokyo 113-8654 (JP)
(72) Inventor: HAIKI, Kenji, Tokyo 103-0027 (JP); MATSUURA, Hiroyuki, Tokyo 113-8654 (JP); MOTOBA, Kazuhiko, Tokyo 103-0027 (JP); TOMONAGA, Sakiko, Tokyo 103-0027 (JP); TAMAI, Yoshie, Tokyo 103-0027 (JP); MORI, Shuji, Tokyo 103-0027 (JP)
(74) Representative: v. Bezold & Partner Patentanwälte - PartG mbB
(86) International application number: PCT/JP2023/004931
(87) International publication number: WO 2023/157826

(57) **Abstract**

A zinc recovery method includes an alkali fusion step (102) of, at a temperature equal to or higher than a melting point of sodium hydroxide, bringing a material (1) or the like and molten sodium hydroxide being sodium hydroxide (5) or (14) in a molten state into contact with each other to decompose the zinc ferrite contained in the material (1) or the like into zinc oxide components and iron oxide components in the molten sodium hydroxide, a water leaching step (103) of, at a temperature lower than a boiling point of water, bringing water into contact with sodium hydroxide being the molten sodium hydroxide with a decreased temperature, the zinc oxide components, and the iron oxide components and leaching the zinc oxide components in a sodium hydroxide aqueous solution to obtain a zinc-containing aqueous solution (8) containing zinc components and an insoluble material (9) containing iron oxide components not dissolved in the sodium hydroxide aqueous solution, and a zinc recovery step (105) or (108) of recovering zinc components derived from the zinc-containing aqueous solution (8) .

## Description

### TECHNICAL FIELD

The present invention relates to a zinc recovery method, and more particularly to a zinc recovery method using electric arc furnace dust generated at the time of melting and smelting of scraps in electric furnace steelmaking that is one of iron and steel making processes, as well as primary or secondary dust such as blast furnace dust, blast furnace and converter dust, or RHF (Rotary Hearth Furnace) dust, zinc-containing dust such as roasted ore regarding zinc concentrate, and the like, as a material.

### BACKGROUND ART

In the electric furnace steelmaking that is one of iron and steel making processes, electric arc furnace dust being industrial wastes that are equivalent to about 1.5% to 2.0% of the amount of manufactured steel and that contain zinc oxide components is generated at the time of melting and smelting of scraps. It is said that eight million tons of electric arc furnace dust are generated in the world and that four hundred thousand tons are generated in Japan.

Many of iron scraps are discarded constructions, discarded home appliances, and discarded automobiles. Paint bases of discarded constructions, discarded home appliances, and discarded automobiles are plated with zinc. Furthermore, the scraps contain paint, plastic, oil, and the like. Therefore, the electric arc furnace dust also contains hazardous organics such as chloride, dioxins, and dioxin-like compounds in addition to heavy metals such as zinc or lead. Meanwhile, the electric arc furnace dust contains about 20 to 30% of iron and 20 to 30% of zinc. Crude zinc oxide such as the secondary dust contains about 10% of iron and about 60% of zinc. Accordingly, the electric arc furnace dust) or the like are highly useful as resources.

Under such circumstances, Patent Document 1 relates to a zinc-bullion manufacturing method, and discloses a configuration including a process of producing a zinc-containing aqueous solution containing zinc components using, as a material, electric arc furnace dust or the like, a process of producing refined zinc chloride containing refined zinc chloride by chlorinating zinc components of a zinc-containing compound, where the zinc components in the zinc-containing aqueous solution are the zinc-containing compound having at least one form of carbonate, hydroxide, and oxide, a process of producing anhydrous molten refined zinc chloride containing anhydrated molten refined zinc chloride by anhydrating the refined zinc chloride, and a process of producing zinc bullion as an electrolytic product by electrowinning the anhydrous molten refined zinc chloride.

### PRIOR ART DOCUMENT

### PATENT DOCUMENT

Patent Document 1: Japanese Patent Application Laid-open No. 2019-119895

### SUMMARY OF THE INVENTION

### PROBLEM TO BE SOLVED BY THE INVENTION

However, according to the studies made by the present inventors, although in the configuration disclosed in Patent Document 1, electric arc furnace duct 1 as a material containing a zinc-containing compound such as zinc oxide and an iron compound such as iron oxide and an aqueous solution of an alkali agent 7 are brought into direct contact with each other to produce, as a zinc extract obtained by selectively extracting zinc components from the zinc-containing compound, an alkali agent aqueous solution 30 containing the zinc components, and a solid content not dissolved in the aqueous solution of the alkali agent 7 is handled as residues 20 in a zinc extraction process 101, the filterability when the solid content not dissolved in the aqueous solution of the alkali agent 7 is separated by filtration has a certain limit, and it is found necessary to take a certain time for the filtration. In addition, it is found through the studies that a compound including iron components and zinc components called zinc ferrite (ZnFe₂O₄) being a compound often contained in large amounts in, for example, steelmaking flue dust is difficult to dissolve.

Particularly, according to the studies made by the present inventors, regarding the grade of the electric arc furnace dust, when the zinc grade is low and the iron grade is high, the content of zinc ferrite contained in the electric arc furnace dust or the like increases, and therefore, it is not a trigger for detailed investigation of practical use of a method for recovering zinc that cannot be a leaching target for filtering zinc ferrite. As a result, it is considered to be recognized that zinc ferrite in the electric arc furnace dust or the like is hardly dissolved even when processed with a high-concentration sodium hydroxide aqueous solution at a high temperature and under a high pressure, and thus is hardly leached. That is, according to the studies made by the present inventors, it is considered that a novel zinc recovery method has been desired which can recover zinc by decomposing zinc ferrite into zinc oxide components and iron oxide components even when the content of zinc ferrite in the electric arc furnace dust or the like is large.

The present invention has been achieved through the above studies, and an object of the present invention is to provide a zinc recovery method that can recover zinc contained in electric arc furnace dust or the like while surely decomposing zinc ferrite contained in the electric arc furnace dust or the like.

### MEANS FOR SOLVING THE PROBLEM

In order to achieve the above object, the present inventors made various studies to solve the problem such that, in an alkali aqueous solution leaching process such as an electric arc furnace dust or the like, zinc ferrite contained in an electric arc furnace dust or the like is hardly dissolved in a sodium hydroxide aqueous solution. As a result of the studies, it is found that when an electric arc furnace dust or the like containing zinc ferrite is immersed in molten sodium hydroxide brought to a molten state by raising the temperature to about 320° C in a vessel and maintained for about 1 hour and thereafter the temperature of the vessel is lowered to obtain a solidified product after melting and then the solidified product is immersed in water in another vessel, zinc components dissolved in the sodium hydroxide aqueous solution (zinc-containing aqueous solution) and iron oxide components as residues of the solidified product are obtained, thereby completed the present invention.

A zinc recovery method according to a first aspect of the present invention comprises: an alkali fusion step of, at a first temperature equal to or higher than a melting point of sodium hydroxide, bringing a material containing zinc components and zinc ferrite or a processed material obtained by processing the material and molten sodium hydroxide being sodium hydroxide in a molten state into contact with each other to decompose the zinc ferrite contained in the material or the processed material into zinc oxide components and iron oxide components in the molten sodiumhydroxide; a water leaching step of, at a second temperature lower than a boiling point of water, bringing water into contact with sodium hydroxide being the molten sodium hydroxide with a decreased temperature, the zinc oxide components, and the iron oxide components and leaching the zinc oxide components in a sodium hydroxide aqueous solution to obtain a first zinc-containing aqueous solution containing zinc components and an insoluble material containing iron oxide components not dissolved in the sodium hydroxide aqueous solution; and a zinc recovery step of recovering zinc components derived from the first zinc-containing aqueous solution.

According to a second aspect of the present invention, in addition to the first aspect at least one of hydrogen peroxide and sodium nitrate as an oxidant or at least one of sodium sulfite, sodium thiosulfate, sodium dithionite, and zinc metal as a reductant is added to the sodium hydroxide in the alkali fusion step.

According to a third aspect of the present invention, in addition to the first or second aspect, the zinc recovery method further comprises a halogen washing step of, prior to the alkali fusion step, washing the material with a sodium hydroxide aqueous solution having a pH value in a range of 8.5 or more and 10.5 or less to wash halogen components contained in the material.

According to a fourth aspect of the present invention, in addition to any of the first to third aspects, the zinc recovery method further comprises: a magnetic separation step of, prior to the alkali fusion step, applying magnetic force to the material or the processed material via a magnet and separating a first separated material composed of components and a second separated material not attached to the magnet from each other in accordance with magnetic strengths of components in the material or the processed material; and an alkali aqueous solution leaching step, to which the second separated material is sent, of leaching zinc components contained in the second separated material in a sodium hydroxide aqueous solution to selectively extract the zinc components, to obtain a second zinc-containing aqueous solution containing the zinc components, wherein the first separated material is sent to the alkali fusion step as the processed material, and the zinc ferrite in the first separated material is decomposed into the zinc oxide components and the iron oxide components.

According to a fifth aspect of the present invention, in addition to any of the first to third aspects, the zinc recovery method further comprises a purifying step of purifying the first zinc-containing aqueous solution, wherein the purifying step includes a deironization step of bringing potassium permanganate or hydrogen peroxide as an oxidant into contact with the first zinc-containing aqueous solution to remove solidified iron, a desiliconization, carbonate removal, and defluorination step of bringing slaked lime or quicklime into contact with the first zinc-containing aqueous solution from which the iron has been removed to remove silicate, carbonate, and fluorine each of which has been solidified, and a cementation step of bringing metal zinc into contact with the first zinc-containing aqueous solution from which the iron, the silicate, the carbonate, and the fluorine have been removed to reduce and deposit metal impurity components nobler than zinc and remove the metal impurity components.

According to a sixth aspect of the present invention, in addition to the fifth aspect, the zinc recovery step includes an electrowinning step of performing electrolysis using, as an electrolyte, the first zinc-containing aqueous solution or the first zinc-containing aqueous solution purified to obtain electrolytic zinc.

According to a seventh aspect of the present invention, in addition to the fifth aspect, the zinc recovery step includes a zinc carbonate separating step of separating zinc components in the first zinc-containing aqueous solution or the first zinc-containing aqueous solution purified, as zinc carbonate.

According to an eighth aspect of the present invention, in addition to the fourth aspect, the zinc recovery method further comprises a purifying step of purifying the second zinc-containing aqueous solution, wherein the purifying step includes a deironization step of bringing potassium permanganate or hydrogen peroxide as an oxidant into contact with the second zinc-containing aqueous solution to remove solidified iron, a desiliconization, carbonate removal, and defluorination step of bringing slaked lime or quicklime into contact with the second zinc-containing aqueous solution from which the iron has been removed to remove silicate, carbonate, and fluorine each of which has been solidified, and a cementation step of bringing metal zinc into contact with the second zinc-containing aqueous solution from which the iron, the silicate, the carbonate, and the fluorine have been removed to reduce and deposit metal impurity components nobler than zinc and remove the metal impurity components.

According to a ninth aspect of the present invention, in addition to the eighth aspect, the zinc recovery step includes an electrowinning step of performing electrolysis using, as an electrolyte, the second zinc-containing aqueous solution or the second zinc-containing aqueous solution purified to obtain electrolytic zinc.

According to a tenth aspect of the present invention, in addition to the eighth aspect, the zinc recovery step includes a zinc carbonate separating step of separating zinc components in the second zinc-containing aqueous solution or the second zinc-containing aqueous solution purified, as zinc carbonate.

According to an eleventh aspect of the present invention, in addition to the first or second aspect, the zinc recovery method further comprises an alkali aqueous solution leaching step of, prior to the alkali fusion step, bringing the material or the processed material into contact with a sodium hydroxide aqueous solution and leaching zinc components contained in the material or the processed material in the sodium hydroxide aqueous solution to selectively extract the zinc components, to obtain a third zinc-containing aqueous solution containing the zinc components and an insoluble material containing zinc ferrite not dissolved in the sodium hydroxide aqueous solution, wherein the insoluble material containing the zinc ferrite is sent to the alkali fusion step as the processed material, decomposed into zinc oxide components and iron oxide components, and in the water leaching step, a fourth zinc-containing aqueous solution containing zinc components is obtained by leaching the zinc oxide components in the sodium hydroxide aqueous solution.

According to a twelfth aspect of the present invention, in addition to the eleventh aspect, the fourth zinc-containing aqueous solution is sent to the alkali aqueous solution leaching step, and zinc components contained in the fourth zinc-containing aqueous solution are selectively extracted and become a part of the third zinc-containing aqueous solution.

According to a thirteen aspect of the present invention, in addition to the eleventh or twelfth aspect, the zinc recovery method further comprises a halogen washing step of, prior to the alkali aqueous solution leaching step, washing the material with a sodium hydroxide aqueous solution having a pH value in a range of 8.5 or more and 10.5 or less to wash halogen components contained in the material and obtain the processed material.

According to a fourteenth aspect of the present invention, in addition to any of the eleventh to thirteenth aspects, the zinc recovery method further comprises a purifying step of purifying the third zinc-containing aqueous solution, wherein the purifying step includes a deironization step of bringing potassium permanganate or hydrogen peroxide as an oxidant into contact with the third zinc-containing aqueous solution to remove solidified iron, a desiliconization, carbonate removal, and defluorination step of bringing slaked lime or quicklime into contact with the third zinc-containing aqueous solution from which the iron has been removed to remove silicate, carbonate, and fluorine each of which has been solidified, and a cementation step of bringing metal zinc into contact with the third zinc-containing aqueous solution from which the iron, the silicate, the carbonate, and the fluorine have been removed to reduce and deposit metal impurity components nobler than zinc and remove the metal impurity components.

According to a fifteenth aspect of the present invention, in addition to the fourteenth aspect, the zinc recovery step includes an electroinning step of performing electrolysis using, as an electrolyte, the third zinc-containing aqueous solution or the third zinc-containing aqueous solution purified to obtain electrolytic zinc.

According to a sixteenth aspect of the present invention, in addition to the fourteenth aspect, the zinc recovery step includes a zinc carbonate separating step of separating zinc components in the third zinc-containing aqueous solution or the third zinc-containing aqueous solution purified, as zinc carbonate.

According to a seventeenth aspect of the present invention, in addition to the sixth, ninth, or fifteenth aspect, sodium hydroxide and zinc are left in a tailing electrolyte of the electroinning step, and the tailing electrolyte with the sodium hydroxide and the zinc left therein is subjected to evaporation of water, is then placed in a molten state, and is bright into contact with the material or the processed material in the alkali fusion step.

### EFFECT OF THE INVENTION

According to the zinc recovery method of the first aspect of the present invention, the zinc recovery method comprises: an alkali fusion step of, at a first temperature equal to or higher than a melting point of sodium hydroxide, bringing a material containing zinc components and zinc ferrite or a processed material and molten sodium hydroxide being sodium hydroxide in a molten state into contact with each other to decompose the zinc ferrite contained in the material or the processed material into zinc oxide components and iron oxide components in the molten sodiumhydroxide; a water leaching step of, at a second temperature lower than a boiling point of water, bringing water into contact with sodium hydroxide being the molten sodium hydroxide with a decreased temperature, the zinc oxide components, and the iron oxide components and leaching the zinc oxide components in a sodium hydroxide aqueous solution to obtain a first zinc-containing aqueous solution containing zinc components and an insoluble material containing iron oxide components not dissolved in the sodium hydroxide aqueous solution; and a zinc recovery step of recovering zinc components derived from the first zinc-containing aqueous solution. Therefore, it is possible to efficiently recover zinc contained in electric arc furnace dust or the like while surely decomposing zinc ferrite contained in the electric arc furnace dust or the like.

According to the zinc recovery method of the second aspect of the present invention, at least one of hydrogen peroxide and sodium nitrate as an oxidant or at least one of sodium sulfite, sodium thiosulfate, sodium dithionite, and zinc metal as a reductant is added to the sodium hydroxide in the alkali fusion step. Therefore, it is possible to decompose zinc ferrite contained in the electric arc furnace dust or the like more surely.

According to the zinc recovery method of the third aspect of the present invention, the zinc recovery method comprises a halogen washing step of, prior to the alkali fusion step, washing the material with a sodium hydroxide aqueous solution having a pH value in a range of 8.5 or more and 10.5 or less to wash halogen components contained in the material to obtain a processed material. Therefore, it is possible to surely elute and wash the halogen components contained in the electric arc furnace dust or the like.

According to the zinc recovery method of the fourth aspect of the present invention, the zinc recovery method further comprises: a magnetic separation step of, prior to the alkali fusion step, applying magnetic force to the material or the processed material via a magnet and separating a first separated material composed of components attached to the magnet and a second separated material not attached to the magnet from each other in accordance with magnetic strengths of components in the material or the processed material; and an alkali aqueous solution leaching step, to which the second separated material is sent, of leaching zinc components contained in the second separated material in a sodium hydroxide aqueous solution to selectively extract the zinc components, to obtain a second zinc-containing aqueous solution containing the zinc components, wherein the first separated material is sent to the alkali fusion step as the processed material, and the zinc ferrite in the first separated material is decomposed into the zinc oxide components and the iron oxide components. Therefore, in a mode in which the amount of energy consumption is reduced, it is possible to efficiently recover zinc contained in the electric arc furnace dust or the like while decomposing zinc ferrite contained in the electric arc furnace dust or the like more surely.

According to the zinc recovery method of the fifth aspect of the present invention, the zinc recovery method further comprises a purifying step of purifying the first zinc-containing aqueous solution, wherein the purifying step includes a deironization step of bringing potassium permanganate or hydrogen peroxide as an oxidant into contact with the first zinc-containing aqueous solution to remove solidified iron, a desiliconization, carbonate removal, and defluorination step of bringing slaked lime or quicklime into contact with the first zinc-containing aqueous solution from which the iron has been removed to remove silicate, carbonate, and fluorine each of which has been solidified, and a cementation step of bringing metal zinc into contact with the first zinc-containing aqueous solution from which the iron, the silicate, the carbonate, and the fluorine have been removed to reduce and deposit metal impurity components nobler than zinc and remove the metal impurity components. Therefore, zinc with mixing of impurities reduced can be recovered.

According to the zinc recovery method of the sixth aspect of the present invention, the zinc recovery step includes an electrowinning step of performing electrolysis using, as an electrolyte, the first zinc-containing aqueous solution or the first zinc-containing aqueous solution purified to obtain electrolytic zinc. Therefore, electrolytic zinc with mixing of impurities reduced can stably be recovered in a high yield.

According to the zinc recovery method of the seventh aspect of the present invention, the zinc recovery step includes a zinc carbonate separating step of separating zinc components in the first zinc-containing aqueous solution or the first zinc-containing aqueous solution purified, as zinc carbonate. Therefore, zinc carbonate with mixing of impurities reduced can stably be recovered in a high yield.

According to the zinc recovery method of the eighth aspect of the present invention, the zinc recovery method further comprises a purifying step of purifying the second zinc-containing aqueous solution, wherein the purifying step includes a deironization step of bringing potassium permanganate or hydrogen peroxide as an oxidant into contact with the second zinc-containing aqueous solution to remove solidified iron, a desiliconization, carbonate removal, and defluorination step of bringing slaked lime or quicklime into contact with the second zinc-containing aqueous solution from which the iron has been removed to remove silicate, carbonate, and fluorine each of which has been solidified, and a cementation step of bringing metal zinc into contact with the second zinc-containing aqueous solution from which the iron, the silicate, the carbonate, and the fluorine have been removed to reduce and deposit metal impurity components nobler than zinc and remove the metal impurity components. Therefore, zinc with mixing of impurities reduced can be recovered.

According to the zinc recovery method of the ninth aspect of the present invention, the zinc recovery step includes an electrowinning step of performing electrolysis using, as an electrolyte, the second zinc-containing aqueous solution or the second zinc-containing aqueous solution purified to obtain electrolytic zinc. Therefore, electrolytic zinc with mixing of impurities reduced can stably be recovered in a high yield.

According to the zinc recovery method of the tenth aspect of the present invention, the zinc recovery step includes a zinc carbonate separating step of separating zinc components in the second zinc-containing aqueous solution or the second zinc-containing aqueous solution purified, as zinc carbonate. Therefore, zinc carbonate with mixing of impurities reduced can stably be recovered in a high yield.

According to the zinc recovery method of the eleventh aspect of the present invention, the zinc recovery method further comprises an alkali aqueous solution leaching step of, prior to the alkali fusion step, bringing the material or the processed material into contact with a sodium hydroxide aqueous solution and leaching zinc components contained in the material or the processed material in the sodium hydroxide aqueous solution to selectively extract the zinc components, to obtain a third zinc-containing aqueous solution containing the zinc components and an insoluble material containing zinc ferrite not dissolved in the sodium hydroxide aqueous solution, wherein the insoluble material containing the zinc ferrite is sent to the alkali fusion step as the processed material, decomposed into zinc oxide components and iron oxide components, and in the water leaching step, the zinc oxide components are dissolved in the sodium hydroxide aqueous solution to obtain a fourth zinc-containing aqueous solution containing zinc components. Therefore, in a mode in which the amount of energy consumption is reduced, it is possible to efficiently recover zinc contained in the electric arc furnace dust or the like while decomposing zinc ferrite contained in the electric arc furnace dust or the like more surely.

According to the zinc recovery method of the twelfth aspect of the present invention, the fourth zinc-containing aqueous solution is sent to the alkali aqueous solution leaching step, and zinc components contained in the fourth zinc-containing aqueous solution are selectively extracted and become a part of the third zinc-containing aqueous solution. Therefore, it is possible to more efficiently recover zinc contained in the electric arc furnace dust or the like.

According to the zinc recovery method of the thirteenth aspect of the present invention, the zinc recovery method further comprises a halogen washing step of, prior to the alkali aqueous solution leaching step, washing the material with a sodium hydroxide aqueous solution having a pH value in a range of 8.5 or more and 10.5 or less to wash halogen components contained in the material and obtain the processed material. Therefore, it is possible to surely elute and wash the halogen components contained in the electric arc furnace dust or the like.

According to the zinc recovery method of the fourteenth aspect of the present invention, the zinc recovery method further comprises a purifying step of purifying the third zinc-containing aqueous solution, wherein the purifying step includes a deironization step of bringing potassium permanganate or hydrogen peroxide as an oxidant into contact with the third zinc-containing aqueous solution to remove solidified iron, a desiliconization, carbonate removal, and defluorination step of bringing slaked lime or quicklime into contact with the third zinc-containing aqueous solution from which the iron has been removed to remove silicate, carbonate, and fluorine each of which has been solidified, and a cementation step of bringing metal zinc into contact with the third zinc-containing aqueous solution from which the iron, the silicate, the carbonate, and the fluorine have been removed to reduce and deposit metal impurity components nobler than zinc and remove the metal impurity components. Therefore, zinc with mixing of impurities reduced can be recovered.

According to the zinc recovery method of the fifteenth aspect of the present invention, the zinc recovery step includes an electrowinning step of performing electrolysis using, as an electrolyte, the third zinc-containing aqueous solution or the third zinc-containing aqueous solution purified to obtain electrolytic zinc. Therefore, electrolytic zinc with mixing of impurities reduced can stably be recovered in a high yield.

According to the zinc recovery method of the sixteenth of the present invention, the zinc recovery step includes a zinc carbonate separating step of separating zinc components in the third zinc-containing aqueous solution or the third zinc-containing aqueous solution purified, as zinc carbonate. Therefore, zinc carbonate with mixing of impurities reduced can stably be recovered in a high yield.

According to the zinc recovery method of the seventeenth aspect of the present invention, sodium hydroxide and zinc are left in a tailing electrolyte of the electrowinning step, and the tailing electrolyte with the sodium hydroxide and the zinc left therein is subjected to evaporation of water, is then placed in a molten state, and is bright into contact with the material or the processed material in the alkali fusion step. Therefore, in a mode in which the amount of consumption of sodium hydroxide is reduced, electrolytic zinc with mixing of impurities reduced can stably be recovered in a high yield.

### BRIEF DESCRIPTION OF THE DRAWINGS

[FIG. 1] FIG. 1 is a process diagram of a zinc recovery method according to a first embodiment of the present invention.
[FIG. 2] FIG. 2 is a process diagram of a zinc recovery method according to a second embodiment of the present invention.
[FIG. 3] FIG. 3 is a process diagram of a zinc recovery method according to a third embodiment of the present invention.
[FIG. 4] FIG. 4 is a process diagram of a zinc recovery method according to a fourth embodiment of the present invention.

### EMBODIMENT FOR CARRYING OUT THE INVENTION

A zinc recovery method according to embodiments of the present invention will be explained below in detail with reference to the accompanying drawings as appropriate.

### (First embodiment)

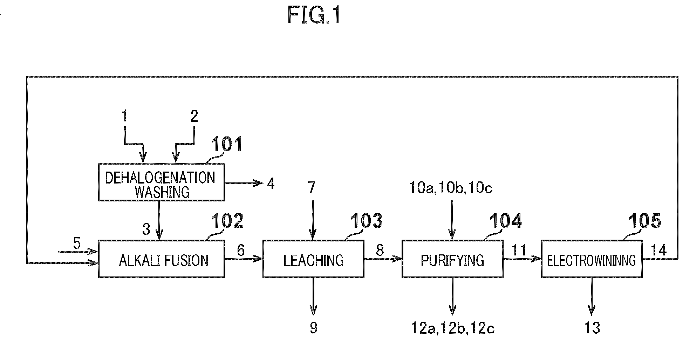

First, a zinc recovery method according to a first embodiment of the present invention is described in detail with reference to FIG. 1.

FIG. 1 is a diagram illustrating processes of the zinc recovery method according to the present embodiment.

As illustrated in FIG. 1, in the zinc recovery method of the present embodiment, a dehalogenation washing process 101, an alkali fusion process 102, a water leaching process 103, a purifying process 104, and an electrowinning process 105 are performed in turn. The electrowinning process 105 corresponds to a zinc recovery process. Descriptions will be provided by referring to an electric arc furnace dust 1 as a typical example of the material used in this recovery method. This material maybe any material as long as it contains at least a zinc compound such as zinc oxide, an iron compound such as iron oxide, and zinc ferrite that is a compound of iron and zinc. Other than the electric arc furnace dust, the material may be primary dust or secondary dust such as blast furnace dust, blast furnace and converter dust, or RHF (Rotary Hearth Furnace) dust, calcine regarding a zinc concentrate, or the like.

Specifically, in the dehalogenation washing process 101, the electric arc furnace dust 1 as the material containing the zinc compound such as zinc oxide, the iron compound such as iron oxide, and zinc ferrite being a compound of iron and zinc is washed with a washing solution 2 to elute halogen components such as chlorine components and fluorine components adsorbed to the electric arc furnace dust 1 and separate the halogen components from the electric arc furnace dust 1, so that washed electric arc furnace dust 3 is obtained. The washed electric arc furnace dust 3 is sent to the next alkali fusion process 102. As the washing solution 2, an aqueous solution of a strong alkali agent having a high effect of eluting the halogen components from the electric arc furnace dust 1 can be suitably used. Specifically, a sodium hydroxide aqueous solution being an aqueous solution of such a strong alkali agent can be suitably used as the washing solution 2.

Typically, the electric arc furnace dust 1 crushed into a predetermined size or less in advance is immersed in the sodium hydroxide aqueous solution as the washing solution 2, the electric arc furnace dust 1 thus immersed is stirred in the sodium hydroxide aqueous solution for a predetermined time to be formed into a slurry, and the halogen components adhering to the electric arc furnace dust 1 in the slurry state are eluted from the electric arc furnace dust 1. If the pH value of the electric arc furnace dust 1 in the slurry state is less than 8.5, the amount of the halogen components eluted from the electric arc furnace dust 1 cannot be secured as apracticalamount, and unnecessary elution of zinc components and lead components from the electric arc furnace dust 1 occurs . Therefore, the pH value is preferably 8.5 or more. Inaddition, if the pH value of the electric arc furnace dust 1 in the slurry state exceeds 10.5, the zinc components are extracted from the electric arc furnace dust 1, and the amount of the zinc components in the washed electric arc furnace dust 3 to be sent to the process in the next stage is reduced. Therefore, the pH value is preferably 10.5 or less. Accordingly, the pH value of the sodium hydroxide aqueous solution as the washing lution 2 is also preferably set within a range of 8.5 or more and 10.5 or less. A used washing solution 4, in which the halogen components that have been adsorbed to the electric arc furnace dust 1 and eluted by washing of the electric arc furnace dust 1 with the washing solution 2, may be simply discharged as a waste solution or may be repeatedly used as the washing solution 2 with which the electric arc furnace dust 1 is washed again within a range in which further elution of the chlorine components is possible. The reason for providing the dehalogenation washing process 101 before the alkali fusion process 102 and the water leaching process 103 is because decomposition of zinc ferrite in the electric arc furnace dust 1 and extraction of the zinc components can be performed more appropriately. In a case of using the electric arc furnace dust 1 in which adhesion of the halogen components such as the chlorine components and the fluorine components has been reduced in advance, the dehalogenation washing process 101 may be omitted.

Next, in the alkali fusion process 102, the washed electric arc furnace dust 3 and molten sodium hydroxide obtained by placing sodium hydroxide 5 as a strong alkali agent in the molten state are brought into contact with each other in a temperature environment equal to or higher than the melting point of sodium hydroxide 5, zinc ferrite contained in the electric arc furnace dust 3 is decomposed into zinc oxide components and iron oxide components in the molten sodium hydroxide, and the molten sodium hydroxide containing the zinc oxide components and the iron oxide components after decomposition is cooled to obtain a zinc-containing solidified product 6 in which zinc ferrite has been decomposed. The reason for using the sodium hydroxide 5 among strong alkali agents is because the property that zinc ferrite can be rapidly decomposed by placing the sodium hydroxide 5 in the molten state is considered. The zinc-containing solidified product 6 in which zinc ferrite has been decomposed is sent to the next water leaching process 103.

Typically, the washed electric arc furnace dust 3 is immersed in a sodium hydroxide aqueous solution being an aqueous solution of the sodium hydroxide 5, the sodium hydroxide aqueous solution with the washed electric arc furnace dust 3 immersed therein is heated to cause water to be evaporated, the mixture of the washed electric arc furnace dust 3 and the sodium hydroxide 5 is heated until the temperature exceeds the melting point of sodium hydroxide 5 to melt the sodium hydroxide 5 into molten sodium hydroxide, and the molten sodium hydroxide is brought into contact with the washed electric arc furnace dust 3 for a predetermined time, so that zinc ferrite contained in the electric arc furnace dust 3 is decomposed into the zinc oxide components and the iron oxide components. The chemical formula in this case is represented by the following (Formula 1).
[Formula 1]

ZnFe₂O₄+2NaOH→ZnO+2NaFeO₂+H₂O ··· (Formula 1)

In the alkali fusion process 102, in a case where electrolysis in the electrowinning process 105 has been started and a tailing electrolyte 14 is available, it is preferable to use that tailing electrolyte 14 in combination with the sodium hydroxide 5 or without using the sodium hydroxide 5 and to bring the product obtained by evaporating water of the tailing electrolyte 14 into contact with the washed electric arc furnace dust 3 from the middle of the present execution of the zinc recovery method or from the start of the next execution of the zinc recovery method from the viewpoint of reducing the amount of sodium hydroxide 5 used without wastefully discarding the tailing electrolyte 14.

Further, in the alkali fusion process 102, the mixture of the washed electric arc furnace dust 3 and the sodium hydroxide 5 is heated until the temperature exceeds the melting point of sodium hydroxide 5, and the washed electric arc furnace dust 3 and the molten sodium hydroxide are brought into contact with each other. As for a temperature range in this process, the lower limit needs to be a value equal to or higher than the melting point (about 318° C) of sodium hydroxide 5 from the viewpoint of surely maintaining the sodium hydroxide 5 in the molten state, and is preferably a value equal to or higher than 320° C in consideration of practical variation. The upper limit of the temperature range in this process is naturally required to be a value lower than the boiling point of sodium hydroxide 5. However, since that boiling point is a high temperature exceeding 1300° C, the upper limit is preferably a value of 600° C or lower in consideration of the amount of energy applied for decomposing zinc ferrite and the decomposition efficiency. Examples of the alkali agent that can be applied to produce a molten salt in order to decompose zinc ferrite include potassium hydroxide and sodium carbonate, in addition to the sodium hydroxide 5. Examples of an oxidant added to this molten salt for promoting decomposition of zinc ferrite include hydrogen peroxide and sodium nitrate.

Similarly, as a reductant added to the molten salt, at least one of sodium sulfite, sodium thiosulfate, sodium dithionite and zinc metal is used. The alkali agent, the oxidant, and the reductant are used depending on the situation of impurities . From the viewpoint of decomposing zinc ferrite, the sodium hydroxide 5 preferably has a weight of two times or more the weight of zinc and iron in zinc ferrite. Further, the alkali fusionprocess 102 is performed in a high temperature environment at least equal to or higher than the melting point of sodium hydroxide 5. Therefore, when the sodium hydroxide 5 that has once become an aqueous solution or the tailing electrolyte 14 is introduced into this process, water contained therein is evaporated to form water vapor. Therefore, it is preferable to cool and liquify the water vapor to return to water by causing the water vapor to pass through a heat exchanger, and to use the heat obtained by the heat exchanger for heating in the alkali fusion process 102 or an alkali aqueous solution leaching process 106, which will be described in a second embodiment, from the viewpoint of enhancing the heat efficiency in the alkali fusion process 102 and reducing the amount of energy consumption.

Furthermore, in the alkali fusion process 102, it is preferable to add an organic material that reacts with chlorine to produce a volatile compound to the aqueous solution of sodium hydroxide 5 or the tailing electrolyte 14, immerse the washed electric arc furnace dust 3 in the aqueous solution of sodium hydroxide 5 or the tailing electrolyte 14, cause the organic material and chlorine in the washed electric arc furnace dust 3 to react with each other during evaporation of water in the aqueous solution of sodium hydroxide 5 or the tailing electrolyte 14, and cause the reaction product to be volatilized as a volatile organic chlorine compound. Consequently, it is possible to reduce the concentration of the chlorine components in the washed electric arc furnace dust 3 and to obtain the zinc-containing solidified product 6 in which zinc ferrite has been decomposed and the chlorine concentration has been reduced. A practically suitable example of such an organic material is ethanol. In this case, ethanol and chlorine in the washed electric arc furnace dust 3 are caused to react with each other to produce chloroform being a volatile organic chlorine compound and volatilize chloroform.

In the next water leaching process 103, water 7 is brought into contact with the zinc-containing solidified product 6 in which zinc ferrite has been decomposed in a temperature environment lower than the melting point of sodium hydroxide, typically lower than the boiling point (100° C) of water, so that a sodium hydroxide aqueous solution thus produced and an insoluble material containing iron oxide components not dissolved in the sodium hydroxide aqueous solution are obtained. At this time, zinc oxide components obtained by decomposition of zinc ferrite and zinc oxide components originally contained in the electric arc furnace dust 1 are dissolved in the sodium hydroxide aqueous solution, and the sodium hydroxide aqueous solution is a zinc-containing sodium hydroxide aqueous solution 8. The mixture of the zinc-containing sodium hydroxide aqueous solution 8 and the insoluble material containing the iron oxide components are then filtered out, so that filtration separation (solid-liquid separation) of the zinc-containing sodium hydroxide aqueous solution 8 and the insoluble material containing the iron oxide components is performed. The zinc-containing sodium hydroxide aqueous solution 8 separated from the insoluble material containing the iron oxide components is sent to the next purifying process 104, with the zinc concentration increased. The insoluble material containing the iron oxide components is discharged as residues 9.

In the next purifying process 104, first, potassium permanganate or hydrogen peroxide 10a as an oxidant is brought into contact with the zinc-containing sodium hydroxide aqueous solution 8 to solidify iron, and solidified iron 12a is separated from the zinc-containing sodium hydroxide aqueous solution 8 and discharged as residues. A zinc-containing sodium hydroxide aqueous solution from which the iron 12a has been removed is thus obtained (deironizationprocess) . Next, slaked lime or quicklime 10b is brought into contact with the zinc-containing sodium hydroxide aqueous solution from which the iron 12a has been separated to solidify silicate, carbonate, and fluorine 12b, and the silicate, carbonate, and fluorine 12b are further separated from the zinc-containing sodium hydroxide aqueous solution from which the iron 12a has been separated and are discharged as residues. Thus, the zinc-containing sodium hydroxide aqueous solution from which the silicate, carbonate, and fluorine 12b have been separated in addition to the iron 12a is obtained (desiliconization, carbonate removal, and defluorination process). Next, metallic zinc 10c is brought into contact with the zinc-containing sodium hydroxide aqueous solution from which the iron 12a and the silicate, carbonate, and fluorine 12b have been removed to reduce and deposit metal impurity components 12c nobler than zinc in the zinc-containing sodium hydroxide aqueous solution 8, so that a zinc-containing sodium hydroxide aqueous solution 11 further purified as compared with the zinc-containing sodium hydroxide aqueous solution 8 and the deposited metal impurity components 12c are obtained. The last process in the purifying process 104 is a substitution process (cementation process) that applies the metallic zinc 10c. Further, the purified zinc-containing sodium hydroxide aqueous solution 11 is sent to the next electrowinning process 105, and the metal impurity components 12c are discharged as residues. The metallic zinc 10c is typically introduced as metallic zinc powder to the zinc-containing sodium hydroxide aqueous solution 8. The zinc-containing sodium hydroxide aqueous solution 8 with the metallic zinc powder introduced thereto is subjected to heating for raising its temperature and is then stirred at high speed while being maintained at a predetermined temperature, so that a cementation reaction is promoted. As a result, the metal impurity components nobler than zinc in the zinc-containing sodium hydroxide aqueous solution 8 can be deposited rapidly. Meanwhile, the metallic zinc 10c may be applied as a metallic zinc plate, not as metallic zinc powder. In this case, the zinc-containing sodium hydroxide aqueous solution 8 is caused to flow to the metallic zinc plate fixed to be stationary and brought into contact with the metallic zinc plate. The cementation reaction is thus promoted in a similar manner. In a case of using the metallic zinc powder, a situation is also considered in which in the cementation reaction, the entire surface of the metallic zinc powder is covered with the deposited metal impurity components, and the center portion of the metallic zinc powder cannot contribute to the cementation reaction. Meanwhile, in a case of using the metallic zinc plate, since setting of the area of contact between that plate and the zinc-containing sodium hydroxide aqueous solution 8 has a high degree of freedom, the area of contact can be increased, the cementation reaction can surely be promoted, and replacement of the metallic zinc plate on which the metal impurity components have been deposited can be performed rapidly. The metallic zinc plate maybe rotated with respect to the flow of the zinc-containing sodium hydroxide aqueous solution 8. In a case of adopting the deironization process, the desiliconization, carbonate removal, and defluorination process, and the cementation process in the purifying process 104, it is preferable that the deironization process, the desiliconization, carbonate removal, and defluorination process, and the cementation process are performed in that order . The reason for that order is as follows . The deironization process is an oxidizing process that removes precipitates being precipitated oxides of iron, manganese, and the like obtained by an oxidant, whereas the cementation process is a reducing process. Therefore, in theory, it is highly necessary to perform the oxidizing deironization process prior to the reducing cementation process. Further, although iron can be removed in the reducing process, the cost of removing iron by the reducing cementation process is higher than the cost of removing iron by the oxidizing deironization process. Therefore, also from the viewpoint of reducing the cost, it is preferable to perform the deironization process prior to the cementation process. As for the desiliconization, carbonate removal, and defluorination process that removes silicate, carbonate, and fluorine by adding slaked lime or quicklime, the execution order with respect to the oxidizing deironization process and the reducing cementation process is not limited in theory. However, the findings by the experimental results obtained so far reveal that, in a case where the desiliconization, carbonate removal, and defluorination process was performed after the oxidizing deironization process and before the reducing cementation process, that is, the deironization process, the desiliconization, carbonate removal, and defluorination process, and the cementation process were performed in that order, the removal rate of these impurities was most improved. Therefore, in the purifying process 104, the deironization process, the desiliconization, carbonate removal, and defluorination process, and the cementation process are performed in that order. The purifying process 104 may be omitted in a case where the zinc-containing sodium hydroxide aqueous solution 8 has few impurity components such as iron, silicon, carbonate, fluorine, and metals nobler than zinc.

Further, in the purifying process 104, a demanganization process of removing manganese by adding an oxidant or the like and a dechlorination process of removing chlorine by adding copper (I) oxide or silver nitrate can be adopted, other than the above processes. These processes can also be combined in an appropriate manner as needed. Considering that the halogen components have been reduced in advance in the dehalogenation washing process 101 and the chlorine components can be reduced in the alkali fusion process 102, it can be said that the priority of adopting the demanganization process is higher than the dechlorination process.

In the next electrowinning process 105, electrolysis is performed using the purified zinc-containing sodium hydroxide aqueous solution 11 as an electrolyte to deposit electrolytic zinc 13 being an electrolytic product on the cathode side, and that zinc is subjected to solid-liquid separation and recovered as a solid. The tailing electrolyte 14, which is the electrolyte after recovery of the electrolytic zinc 13 may be discharged as it is as a waste solution. However, since the tailing electrolyte 14 contains sodium hydroxide, it is more reasonable and preferable to return the tailing electrolyte 14 to the alkali fusion process 102 as it is. In this case, water of the tailing electrolyte 14 is evaporated, and thereafter the tailing electrolyte 14 is placed in a molten state and is brought into contact with the washed electric arc furnace dust 3 in the alkali fusion process 102. This tailing electrolyte 14 may be brought into contact with the washed electric arc furnace dust 3 while being used alone, without using new sodium hydroxide 5, in the alkali fusion process 102 from the middle of the present execution of the zinc recovery method or from the start of the next execution of the zinc recovery method. The zinc components may be left in the tailing electrolyte 14, and the tailing electrolyte 14 containing the zinc components may be returned to the alkali fusion process 102 as it is. In this case, the tailing electrolyte 14 is used as an electrolyte in the electrowinning process 105, while the zinc concentration is increased through at least the alkali fusion process 102 and the water leaching process 103. Therefore, in order to ensure the electrolysis, the electrolyte preferably contains sodium hydroxide having a concentration of 200 g/L or more and zinc having a concentration of 10 g/L or more.

A first experimental example in the present embodiment is described below.

### (Experimental example 1)

In the alkali fusion process 102, the electric arc furnace dust 3 (weight: 150 g) after completion of dehalogenation washing in the dehalogenation washing process 101 and the tailing electrolyte 14 (volume: 1 L) containing NaOH (concentration: 400 g/L) and Zn (concentration: 50 g/L) were put into an iron crucible and heated. Evaporation of water stopped at a solution temperature of about 300° C, and the solution temperature was raised by further heating and maintained at 450° C for one hour. After one hour, heating was stopped. In the water-leaching process 103, when the temperature of the solidified product produced by cooling the molten liquid 6 became lower than 100° C, water injection was started, and the liquid was diluted with water filled to the original volume, 1 L. Thereafter, the resultant solution was stirred while being heated until the solution temperature reached 100° C, so that a slurry in which the remaining solidified product was dissolved was obtained. The slurry was filtered and separated into the Fe residues 9 and the Zn leachate 8 (Zn concentration: 110 g/L). The Fe residues 9 were washed with water and dried. In the purifying process 104, the Zn leachate 8 was used as an oxidative purifying solution, the oxidant (KMnO₄, H₂O₂) 10a was added, stirring was performed for one hour, and filtration of precipitates was performed. Next, the resultant leachate was used as a Ca purifying solution, CaO 10b was added, stirring was performed for one hour, and thereafter filtration of precipitates was performed. Further, the resultant leachate was subjected to cementation in which it was brought into contact with the zinc metal (powder or in the shape of a plate) 10c which was performed at a solution temperature of 60° C for 24 hours, so that impurities Cu, Pb, Cd, Ni, and the like 12c were removed. By using the leachate 11 for which solution purifying by this cementation had been completed as an electrolyte, electrowinning was performed in the electrowinning process 105. When electrolysis was performed under the electrowinning conditions that: the current density was set to 600 A per square meter; the electrolyte concentration was set in such a manner that the concentration of NaOH was 400 g/L and the concentration of Zn was 50 g/L; and the electrolyte temperature was set to 40° C, the electrolytic zinc 13 having a purity of 99.995% was obtained. As for the electrolyte concentration, a solution supply tank was used which circulated and supplied the electrolyte in such a manner that the Zn concentration of an electrolyte supply was 55 g/L and the Zn concentration of the tailing electrolyte was 50 g/L. A part of the tailing electrolyte 14 was extracted and used so as to serve as the leachate 8 in the subsequent water leaching process 103 via an alkali aqueous solution before evaporation in the alkali fusion process 102, and the Zn concentration of the tailing electrolyte 14 was increased from 50 g/L to 110 g/L by water dissolution. Analysis values of the leachate 11 (the purified zinc-containing sodium hydroxide aqueous solution) after completion of solution purifying by cementation are shown in the following (Table 1) . The concentrations of the analyzed components were all less than the lower measurement limit.

### [Table 1]

**Table 1**

| Components | Fe | Co | Ni | Cu | Cd | Pb |
|---|---|---|---|---|---|---|
| g/L | <0.0005 | <0.0002 | <0.0005 | <0.0007 | <0.0002 | <0.008 |

### (Second embodiment)

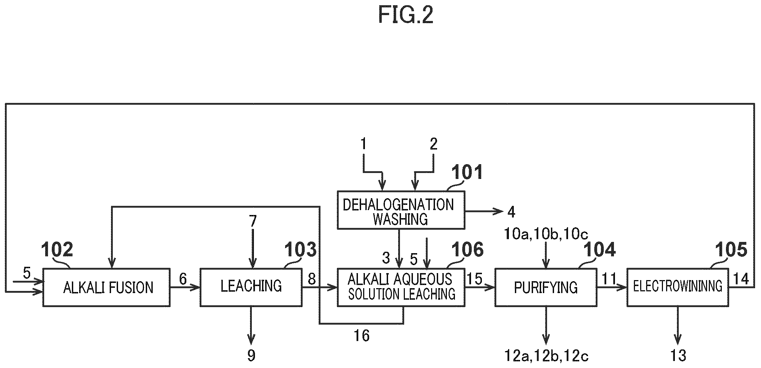

Next, a zinc recovery method according to a second embodiment of the present invention is described in detail with reference to FIG. 2.

FIG. 2 is a diagram illustrating processes of the zinc recovery method according to the present embodiment.

As illustrated in FIG. 2, the zinc recovery method according to the present embodiment is different as compared to the zinc recovery method according to the first embodiment mainly in including an alkali aqueous solution leaching process 106 as the next process of the dehalogenation washing process 101. In the present embodiment, explanations will be made focusing on the difference, and like constituent elements are denoted by like reference signs and explanations thereof are omitted or simplified.

Specifically, the alkali aqueous solution leaching process 106 is provided immediately after the dehalogenation washing process 101. The reason for providing the dehalogenation washing process 101 before the alkali aqueous solution leaching process 106 is because extraction of zinc components in the electric arc furnace dust 1 can be performed more appropriately. The alkali aqueous solution leaching process 106 is a process of, prior to the alkali fusion process 102, bringing the washed electric arc furnace dust 3 into contact with a sodium hydroxide aqueous solution that is an aqueous solution of the sodium hydroxide 5, and leaching the zinc components contained in the washed electric arc furnace dust 3 in the sodium hydroxide aqueous solution to selectively extract the zinc components, thereby obtaining a zinc-containing sodium hydroxide aqueous solution 15 containing the zinc components and obtaining an insoluble material 16 containing zinc ferrite not dissolved in the sodium hydroxide aqueous solution. The reason for using sodium hydroxide as a strong alkali agent is because it enables efficient extraction of the zinc components and it can be shared by the alkali fusion process 102. The following (Formula 2) is a chemical formula in a case of bringing the electric arc furnace dust 3 into contact with the sodium hydroxide aqueous solution and leaching the zinc components contained in the washed electric arc furnace dust 3 in the sodium hydroxide aqueous solution to selectively extract the zinc components, thereby obtaining the zinc-containing sodium hydroxide aqueous solution 15 containing the zinc components.
[Formula 2]

ZnO+2NaOH+H₂O→2Na⁺+[Zn(OH)4]²⁻ ··· (Formula 2)

The zinc-containing sodium hydroxide aqueous solution 15 thus obtained is sent to the next purifying process 104. Meanwhile, the insoluble material 16 containing zinc ferrite thus obtained is sent to the alkali fusion process 102, and the zinc ferrite is decomposed into zinc oxide components and iron oxide components. The zinc-containing solidified product 6 in which the zinc ferrite has been decomposed is sent to the next water leaching process 103 and turned into the zinc-containing sodium hydroxide aqueous solution 8. The zinc-containing sodium hydroxide aqueous solution 8 is sent to the alkali aqueous solution leaching process 106, and the zinc components contained in the zinc-containing sodium hydroxide aqueous solution 8 are selectively extracted and become a part of the zinc-containing sodium hydroxide aqueous solution 15.

In the alkali aqueous solution leaching process 106, in a case where the process in the alkali fusion process 102 proceeds and the zinc-containing sodium hydroxide aqueous solution 8 is produced and sent to the alkali aqueous solution leaching process 106, that zinc-containing sodium hydroxide aqueous solution 8 may be used and brought into contact with the washed electric arc furnace dust 3 by using the sodium hydroxide 5 in combination or without using the sodium hydroxide 5.

Here, the description is provided as to the reason for adopting a so-called countercurrent two-stage process in which the alkali aqueous solution leaching process 106 is provided in addition to the alkali fusion process 102, the insoluble material 16 containing zinc ferrite is sent from the alkali aqueous solution leaching process 106 to the alkali fusion process 102, and the zinc-containing solidified product 6 in which zinc ferrite has been decomposed is sent to the alkali aqueous solution leaching process 106 as the zinc-containing sodium hydroxide aqueous solution 8 via the next water leaching process 103. The alkali fusion process 102 requires a higher temperature environment than the alkali aqueous solution leaching process 106, and thus consumes a larger amount of energy. Therefore, by processing the electric arc furnace dust 1 as a zinc-containing material containing zinc ferrite not only in the alkali fusion process 102 but also in the alkali aqueous solution leaching process 106, it is possible to shorten the processing time in the alkali fusion process 102 and reduce the amount of energy consumption. For example, it is assumed that, in some electric arc furnace dust 1, 88% of the zinc components is contained in zinc oxide and the remaining 12% is contained in zinc ferrite. In this case, it is not reasonable in terms of energy consumption to process zinc oxide, which can be dissolved in the alkali aqueous solution leaching process 106 that can be performed in a temperature environment of 100° C or lower, in a high-temperature alkali fusion process 102. Therefore, by completing extraction of 88% of the zinc components in the alkali aqueous solution leaching process 106 before the alkali fusion process 102 (the total weight of the electric arc furnace dust 3 to be processed is also reduced to about 40%), and decomposing zinc ferrite containing the remaining 12% of the zinc components (having a weight of 8% of the electric arc furnace dust 3 to be processed) in the alkali fusion process 102, the energy consumption can be made reasonable, and the efficiency can be enhanced. Similarly to the alkali fusion process 102, the tailing electrolyte 14 may also be returned to the alkali aqueous solution leaching process 106, and the tailing electrolyte 14 alone or together with the sodium hydroxide aqueous solution may be used as an alkali aqueous solution with which the washed electric arc furnace dust 3 is brought into contact.

A second experimental example in the present embodiment is described below.

### (Second experimental example)

In the alkali fusion process 102, dust 16 after leaching using alkali aqueous solution obtained through the alkali aqueous solution leaching process 106 (for which zin oxide among the contained zinc components was dissolved by leaching using an alkali aqueous solution, and the zinc components in zinc ferrite remained: weight 70 g) and the tailing electrolyte 14 (NaOH concentration: 450 g/L, Zn concentration: 50 g/L, volume: 1 L) were put into an iron vessel with a volume of 2 L, and were stirred while being heated. Evaporation of water was stopped at a liquid temperature of about 300° C. Further heating was then performed until the temperature reached 400° C, and that temperature was maintained for one hour. After one hour, heating was stopped. Then, in the water leaching process 103, the molten liquid 6 was cooled. When its temperature became lower than 100° C, water injection was started, and the molten liquid was diluted to fill 1 L that was the original volume. The molten liquid was stirred while being heated until the liquid temperature reached 100° C, and was held for several hours. Then, after confirming that the zinc components were dissolved, the slurry was filtered. After filtration, the cake of the solid (iron residues 9) was washed and analyzed, and it was confirmed that 98% or more of Zn in the electric arc furnace dust 1 was dissolved.

In the alkali aqueous solution leaching process 106, the electric arc furnace dust 3 (weight: 175 g) after completion of dehalogenation washing in the dehalogenation washing process 101 and the filtrate 8 (volume: 1 L) after completion of the alkali fusion process 102 and the water leaching process 103 were put into an iron reaction vessel and were heated while being stirred until the liquid temperature reached 120° C. This liquid temperature was maintained for two hours. In this process, while the liquid temperature was being raised to 120° C, water was evaporated, and dissolved components were concentrated, so that the boiling point was raised and reached 120° C by increasing the concentration of the dissolved components. After two hours, solid-liquid separation was performed by filtration of the solution. At this time, the solid (iron residues) 16 of about 70 g by dry weight was collected. This solid was used as primary leaching-completion dust and a material for the alkali fusion process 102 that is the next process. Meanwhile, as for the liquid obtained by solid-liquid separation, the Zn concentration was increased to about a level at which the NaOH concentration was 450 g/L and the Zn concentration was 120 g/L, as the leachate 15. Next, in the purifying process 104, this leachate 15 was used as an oxidative purifying solution, the oxidant (KMnO₄, H₂O₂) 10a was added, stirring was performed for one hour, and filtration of precipitates was performed. Next, the resultant leachate was used as a Capurifying solution, CaO 10b was added, stirring was performed for one hour, and thereafter filtration of precipitates was performed. Further, the thus obtained leachate was subjected to cementation in which it was brought into contact with the zinc metal (powder or in the shape of a plate) 10c at a solution temperature of 60° C for 24 hours, so that impurities Cu, Pb, Cd, Ni, and the like 12c were removed. By using the leachate 11 after completion of a series of solution purifying up to this cementation as an electrolyte, electrowinning was performed in the electrowinning process 105. When electrolysis was performed under the electrowinning conditions that: the current density was set to 600 A per square meter; the electrolyte concentration was set in such a manner that the concentration of NaOH was 450 g/L and the concentration of Zn was 55 g/L; and the electrolyte temperature was set to 40° C, the electrolytic zinc 13 having a purity of 99.995% was obtained. As for the electrolyte concentration, a solution supply tank was used which circulated and supplied the electrolyte in such a manner that the Zn concentration of an electrolyte supply was 55 g/L and the Zn concentration of an electrolytic tail solution was 50 g/L. A part of the tailing electrolyte 14 was extracted and used as the leachates 8 and 15 in the subsequent water leaching process 103 and the subsequent alkali aqueous solution leaching process 106 via an alkali aqueous solution before evaporation in the alkali fusion process 102, and the Zn concentration was increased from 50 g/L to 120 g/L by dissolution using water and dissolution using an alkali aqueous solution. As for the analysis values of the leachate 11 (the purified zinc-containing sodium hydroxide aqueous solution) after completion of solution purifying by cementation, the concentrations of the analyzed components were all less than the lower measurement limit, as with the values in (Table 1) in the first experimental example.

### (Third embodiment)

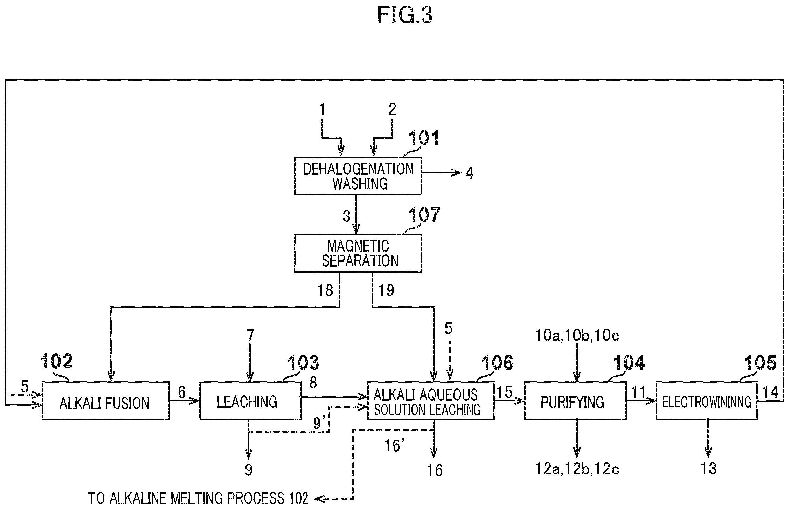

Next, a zinc recovery method according to a third embodiment of the present invention is described in detail with reference to FIG. 3.

FIG. 3 is a diagram illustrating processes of the zinc recovery method according to the present embodiment.

As illustrated in FIG. 3, the zinc recovery method according to the present embodiment is different as compared to the zinc recovery method according to the second embodiment mainly in including a magnetic separation process 107 between the dehalogenation washing process 101 and the alkali aqueous solution leaching process 106. In the present embodiment, explanations will be made focusing on the difference, and like constituent elements are denoted by like reference signs and explanations thereof are omitted or simplified. In a case where magnetic separation can be performed for the electric arc furnace dust 3 before washing, the magnetic separation process 107 can also be performed prior to the dehalogenation washing process 101. The magnetic separation process 107 may be applied to the zinc recovery method according to the first embodiment.

Specifically, the magnetic separation process 107 is provided immediately after the dehalogenation washing process 101. Prior to the alkali aqueous solution leaching process 106, the magnetic separation process 107 applies magnetic force to the washed electric arc furnace dust 3 via a magnet being typically an electromagnet and separates the washed electric arc furnace dust 3 into an attached and separated material 18 formed by components attached to the magnet (which mainly includes zinc ferrite and iron components) and a residual separated material 19 other than the attached and separated material 18 in the washed electric arc furnace dust 3, which is not attached to the magnet, in accordance with the magnetic strengths of components in the electric arc furnace dust 3. In the magnetic separation process 107, a commercially available wet high intensity magnetic separator can be used.

The attached and separated material 18 is sent to the alkali fusion process 102 and is brought into contact with molten sodium hydroxide, so that zinc ferrite in the attached and separated material 18 is decomposed into zinc oxide components and iron oxide components. The zinc-containing solidified product 6 in which the zinc ferrite has been decomposed in this manner is sent to the next water leaching process 103. In the water leaching process 103, the water 7 is brought into contact with the zinc-containing solidified product 6 in which the zinc ferrite has been decomposed, so that the zinc-containing sodium hydroxide aqueous solution 8 and the residues 9 formed by an insoluble material containing the iron oxide components are obtained. However, in a case where the accuracy of separation in the magnetic separation process 107 is low and the residues 9 contain a large amount of zinc components, a part or all of the residues 9' may be sent to the alkali aqueous solution leaching process 106 to cause the zinc components to be selectively extracted.

The residual separated material 19 is sent to the alkali aqueous solution leaching process 106. In this process, the zinc components contained in the residual separated material 19 are dissolved in a sodium hydroxide aqueous solution to be selectively extracted. Consequently, the zinc-containing sodium hydroxide aqueous solution 15 containing the zinc components and the insoluble material 16 not dissolved in the sodium hydroxide aqueous solution are obtained. The zinc-containing sodium hydroxide aqueous solution 15 thus obtained is sent to the next purifying process 104, whereas the insoluble material 16 thus obtained is discharged as residues . However, in a case where the accuracy of separation in the magnetic separation process 107 is low and the insolublematerial 16 contains a large amount of zinc ferrite, a part or all of the insoluble material 16' may be sent to the alkali fusion process 102 to cause the zinc ferrite to be decomposed into the zinc oxide components and the iron oxide components.

A third experimental example in the present embodiment is described below.

### (Third experimental example)

In the alkali fusion process 102, when the magnetic dust 18 obtained through the magnetic separation process 107 after dehalogenation washing in the dehalogenation washing process 101 (referring to the components attached to a magnet in the total weight 175 g of electric arc furnace dust and weighing 67 g) and the alkaline tailing electrolyte 14 (with a NaOH concentration of 450 g/L, a Zn concentration of 50 g/L, and a volume of 1 L) were put into an iron vessel with a volume of 2 L and heated and stirred, evaporation of water was stopped at a solution temperature of about 300° C. Further heating was performed until the temperature reached 400° C, and that temperature was maintained for one hour. After one hour, heating was stopped. Then, in the water leaching process 103, the molten liquid 6 was cooled, and when its temperature became lower than 100° C, water injection was started, and the molten liquid was diluted to fill 1 L that was the original volume. The resultant liquid was stirred while being heated until the liquid temperature reached 100° C, and was held for several hours. Then, after confirming that the zinc components were dissolved, the slurry was filtered. After filtration, the cake of the solid content was washed with water, so that the iron leaching residues 9 were obtained. The iron leaching residues 9 can also be put into the alkali aqueous solution leaching process 106 when zinc dissolution is insufficient.

In the alkali aqueous solution leaching process 106, the non-magnetic dust 19 obtained through the magnetic separation process 107 after completion of dehalogenation washing in the dehalogenation washing process 101 (referring to the components not attached to the magnet in the total weight 175 g of the electric arc furnace dust and weighing 108 g) and the filtrate 8 (volume: 1 L) after completion of the alkali fusion process 102 and the water leaching process 103 were put into an iron reaction vessel, and were heated while being stirred in such a manner that the liquid temperature was raised to 120° C. This liquid temperature was maintained for two hours (similarly to the second experimental example) . After two hours, solid-liquid separation was performed by filtration of the solution, so that the solid 16 (iron residues) was obtained. When this solid 16 was mixed with the iron residues in the alkali fusion and analyzed, it was confirmed that 98% or more of Zn in the electric arc furnace dust was dissolved. The liquid obtained by solid-liquid separation was used as the leachate 15, and the Zn concentration was increased to 120 g/L. Next, in the purifying process 104, this leachate 15 was used as an oxidative purifying solution, the oxidant (KMnO₄, H₂O₂) 10a was added, stirring was performed for one hour, and filtration of precipitates was performed. Next, the resultant leachate was used as a Ca purifying solution, CaO 10b was added, stirring was performed for one hour, and thereafter filtration of precipitates was performed. Further, the resultant leachate was subjected to cementation in which it was brought into contact with the zinc metal (powder or in the shape of a plate) 10c which was performed at a liquid temperature of 60° C for 24 hours, so that impurities Cu, Pb, Cd, Ni, and the like 12c were removed. By using the leachate 11 obtained after completion of a series of liquid purifying up to this cementation as an electrolyte, electrowinning was performed in the electrowinning process 105. When electrolysis was performed under the electrowinning conditions that: the current density was set to 600 A per square meter; the electrolyte concentration was set in such a manner that the concentration of NaOH was 450 g/L and the concentration of Zn was 55 g/L; and the electrolyte temperature was set to 40° C, the electrolytic zinc 13 having a purity of 99.995% was obtained. As for the electrolyte concentration, a solution supply tank was used which circulated and supplied the electrolyte in such a manner that the Zn concentration of an electrolyte supply was 55 g/L and the Zn concentration of a tailing electrolyte was 50 g/L. A part of the tailing electrolyte 14 was extracted and used as the leachates 6 and 8 in the subsequent water leaching process 103 and the subsequent alkali aqueous solution leaching process 106 via an alkali aqueous solution before evaporation in the alkali fusion process 102, and the Zn concentration was increased from 50 g/L to 120 g/L by water dissolution and dissolution using an alkali aqueous solution. As for the analysis values of the leachate 11 (the purified zinc-containing sodium hydroxide aqueous solution) obtained after completion of solution purifying by cementation, the concentrations of the analyzed components were all less than the lower measurement limit, similarly to the values in (Table 1) in the first experimental example.

### (Fourth embodiment)

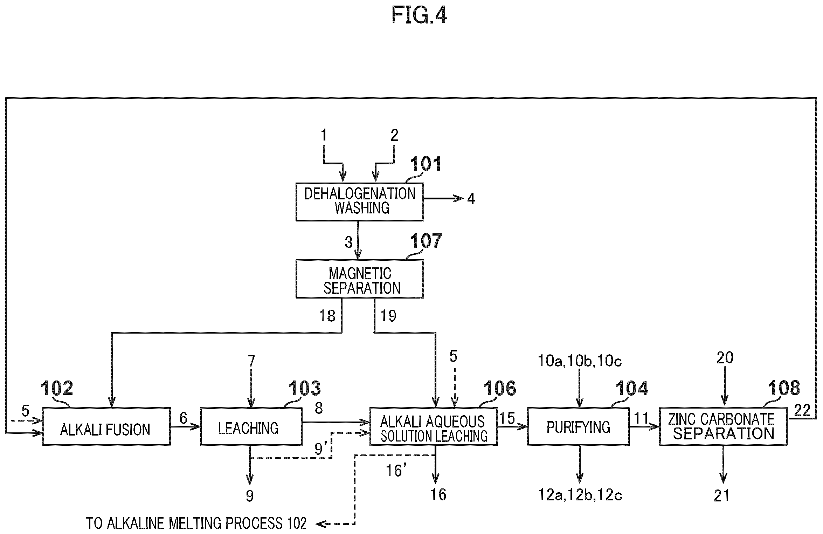

Next, a zinc recovery method according to a fourth embodiment of the present invention is described in detail with reference to FIG. 4.

FIG. 4 is a diagram illustrating processes of the zinc recovery method according to the present embodiment.

As illustrated in FIG. 4, the zinc recovery method according to the present embodiment is different as compared to the zinc recovery method according to the third embodiment mainly in including a zinc carbonate separation process 108 in place of the electrowinning process 105 as a zinc recovery process. In the present embodiment, explanations will be made focusing on the difference, and like constituent elements are denoted by like reference signs and explanations thereof are omitted or simplified. The zinc carbonate separation process 108 may be applied in place of the electrowinning process 105 of the zinc recovery methods according to the first and second embodiments.

Specifically, the zinc carbonate separation process 108 is a process of bringing a carbon dioxide gas 20 into contact with the zinc-containing sodium hydroxide aqueous solution 11 obtained through the purifying process 104, to separate zinc components in the zinc-containing sodium hydroxide aqueous solution 11 as zinc carbonate 21.

Typically, as represented by the following chemical formula (Formula 3), by blowing the carbon dioxide 20 into the zinc components in the zinc-containing sodium hydroxide aqueous solution 11 to cause deposition of zinc carbonate and then filtering the thus deposited zinc carbonate, the solid zinc carbonate 21 is obtained. The zinc carbonate 21 can also be made into a product by drying after washing with water. Since a residual solution 22 of the zinc carbonate separation process 108 contains sodium hydroxide, the residual solution 22 is returned to the alkali fusion process 102. Zinc oxide can also be obtained by roasting the solid zinc carbonate 21.
[Formula 3]

Na₂[Zn(OH)₄]+CO₂→ZnCO₃+2NaOH+H₂O ··· (Formula 3)

In the zinc recovery method according to the above embodiments, it is possible to prevent the chlorine concentration in an alkali hydroxide aqueous solution, a zinc-containing aqueous solution, and a tailing electrolyte from increasing, and to manufacture zinc having characteristics of required quality.

A fourth experimental example in the present embodiment is described below.

### (Fourth experimental example)

Similarly to the third experimental example, the processes up to the purifying process 104 were performed while the Zn concentration was increased from 50 g/L to 120 g/L by dissolution using an alkali aqueous solution. The carbon dioxide gas 20 was blown into the leachate 11 for which this solution purifying had been completed to cause deposition of the zinc carbonate 21, and then the deposited zinc carbonate 21 was recovered by filtration. Further, as for the analysis values of the leachate 11 (the purified zinc-containing sodium hydroxide aqueous solution) for which solution purifying by cementation had been completed, the concentrations of the analyzed components were all less than the lower measurement limit, as with the values in (Table 1) in the first experimental example .

The zinc recovery methods according to the first to fourth embodiments described above include the alkali fusion process 102 of, at a first temperature equal to or higher than a melting point of sodium hydroxide, bringing the material 1 or the processed material 3, 16, or 18, which contains zinc components and zinc ferrite, and molten sodium hydroxide being the sodium hydroxide 5 or 14 in a molten state into contact with each other to decompose the zinc ferrite contained in the material 1 or the processed material 3, 16, or 18 into zinc oxide components and iron oxide components in the molten sodium hydroxide, the water leaching process 103 of, at a second temperature lower than a boiling point of water, bringing water into contact with sodium hydroxide being the molten sodium hydroxide at a decreased temperature, the zinc oxide components, and the iron oxide components and leaching the zinc oxide components in a sodium hydroxide aqueous solution, thereby obtaining the first zinc-containing aqueous solution 8 containing zinc components and the insoluble material 9 containing iron oxide components not dissolved in the sodium hydroxide aqueous solution, and the zinc recovery process 105 or 108 of recovering zinc components derived from the first zinc-containing aqueous solution 8. Therefore, it is possible to surely decompose the zinc ferrite contained in the electric arc furnace dust 1 or the like and efficiently recover the zinc 13 or 21 contained in the electric arc furnace dust 1 or the like.

In the zinc recovery methods according to the first to fourth embodiments, since in the alkaline malting process 102, at least one of hydrogen peroxide and sodium nitrate as an oxidant or at least one of sodium sulfite, sodium thiosulfate, sodium dithionite, and zinc metal as a reductant is added to the sodium hydroxide 5 or 14, the zinc ferrite contained in the electric arc furnace dust 1 or the like can be decomposed more surely.

The zinc recovery methods according to the first, third, and fourth embodiments further include a halogen washing process of, prior to the alkali fusion process 102, washing the material 1 with the washing solution 2 being a sodium hydroxide aqueous solution having a pH value in a range of 8.5 or more and 10.5 or less to wash halogen components contained in the material 1 and obtain the processed material 3. Therefore, it is possible to surely elute and wash the halogen components contained in the electric arc furnace dust 1 or the like.

The zinc recovery methods according to the first, third, and fourth embodiments further include the magnetic separation process 107 of, prior to the alkali fusion process 102, applying magnetic force to the material 1 or the processed material 3 via a magnet and separating the first separated material 18 composed of components attached to the magnet and the second separated material 19 not attached to the magnet from each other in accordance with the magnetic strengths of components in the material 1 or the processed material 3, and the alkali aqueous solution leaching process 106 to which the second separated material 19 is sent and that dissolves zinc components contained in the second separated material 19 in a sodium hydroxide aqueous solution to selectively extract the zinc components and obtain the second zinc-containing aqueous solution 15 containing the zinc components. The first separated material 18 is sent to the alkali fusion process 102 as the processed material, and zinc ferrite in the first separated material 18 is decomposed into zinc oxide components and iron oxide components. Therefore, in a mode in which the amount of energy consumption is reduced, it is possible to efficiently recover the zinc 13 or 21 contained in the electric arc furnace dust 1 or the like while more surely decomposing the zinc ferrite contained in the electric arc furnace dust 1 or the like.

The zinc recovery methods according to the first, third, and fourth embodiments further include the purifying process 104 of purifying the first zinc-containing aqueous solution 8 or the second zinc-containing aqueous solution 15. The purifying process 104 includes a deironization process of bringing potassium permanganate or hydrogen peroxide 10a as an oxidant into contact with the first zinc-containing aqueous solution 8 or the second zinc-containing aqueous solution 15 to remove solidified iron, a desiliconization, carbonate removal, and defluorination process of bringing the slaked lime or quicklime 10b into contact with the first zinc-containing aqueous solution 8 or the second zinc-containing aqueous solution 15 from which the iron has been removed to remove silicate, carbonate, and fluorine each of which has been solidified, and a cementation process of bringing the metallic zinc 10c into contact with the first zinc-containing aqueous solution 8 or the second zinc-containing aqueous solution 15 from which the iron, the silicate, the carbonate, and the fluorine have been removed to reduce and deposit metal impurity components nobler than zinc and remove the metal impurity components. Therefore, the zinc 13 or 21 with the mixing of impurities reduced can be recovered.

In the zinc recovery methods according to the first and third embodiments, the zinc recovery process includes the electrowinning process 105 of performing electrolysis using, as an electrolyte, the first zinc-containing aqueous solution 8, the second zinc-containing aqueous solution 15, or the solution 11 obtained by purifying the first zinc-containing aqueous solution 8 or the second zinc-containing aqueous solution 15 to obtain the electrolytic zinc 13. Therefore, the electrolytic zinc 13 with mixing of impurities reduced can stably be recovered with a high yield.

In the zinc recovery methods according to the first and fourth embodiments, the zinc recovery process includes the zinc carbonate separation process 108 of separating zinc components in the first zinc-containing aqueous solution 8, in the second zinc-containing aqueous solution 15, or in the solution 11 obtained by purifying the first zinc-containing aqueous solution 8 or the second zinc-containing aqueous solution 15 as the zinc carbonate 21. Therefore, the zinc carbonate 21 with mixing of impurities reduced can stably be recovered with a high yield.

The zinc recovery method according to the second embodiment further includes the alkali aqueous solution leaching process 106 of, prior to the alkali fusion process 102, the material 1 or the processed material 3 into contact with a sodium hydroxide aqueous solution and leaching zinc components contained in the material 1 or the processed material 3 in the sodium hydroxide aqueous solution to selectively extract the zinc components, thereby obtaining the third zinc-containing aqueous solution 15 containing the zinc components and obtaining the insoluble material 16 containing zinc ferrite not dissolved in the sodium hydroxide aqueous solution. The insoluble material 16 containing the zinc ferrite is sent as the processed material to the alkali fusion process 102 and is decomposed into zinc oxide components and iron oxide components, and in the water leaching process 103, the fourth zinc-containing aqueous solution 8 that contains zinc components is obtained by leaching the zinc oxide components in a sodium hydroxide aqueous solution. Therefore, in a mode in which the amount of energy consumption is reduced, it is possible to efficiently recover the zinc 13 or 21 contained in the electric arc furnace dust 1 or the like while decomposing the zinc ferrite contained in the electric arc furnace dust 1 or the like more surely.

In the zinc recovery method according to the second embodiment, the fourth zinc-containing aqueous solution 8 is sent to the alkali aqueous solution leaching process 106, and the zinc components contained in the fourth zinc-containing aqueous solution 8 are selectively extracted and become a part of the third zinc-containing aqueous solution 15. Therefore, the zinc 13 or 21 contained in the electric arc furnace dust 1 or the like can be recovered more efficiently.

The zinc recovery method according to the second embodiment further includes the halogen washing process 101 of, prior to the alkali aqueous solution leaching process 106, washing the material 1 with a sodium hydroxide aqueous solution having a pH value in a range of 8.5 or more and 10.5 or less to wash halogen components contained in the material 1 and obtain the processed material. Therefore, it is possible to surely elute and wash the halogen components contained in the electric arc furnace dust 1 or the like.

The zinc recovery method according to the second embodiment further includes the purifying process 104 of purifying the third zinc-containing aqueous solution 15. The purifying process 104 includes a deironization process of bringing potassium permanganate or hydrogen peroxide 10a as an oxidant into contact with the third zinc-containing aqueous solution 15 to remove solidified iron, a desiliconization, carbonate removal, and defluorination process of bringing the slaked lime or quicklime 10b into contact with the third zinc-containing aqueous solution 15 from which the iron has been removed to remove silicate, carbonate, and fluorine each of which has been solidified, and a cementation process of bringing the metallic zinc 10c into contact with the third zinc-containing aqueous solution 15 from which the iron, the silicate, the carbonate, and the fluorine have been removed to reduce and deposit metal impurity components nobler than zinc and remove the metal impurity components. Therefore, the zinc 13 or 21 with the mixing of impurities reduced can be recovered.

In the zinc recovery method according to the second embodiment, the zinc recovery process includes the electrowinning process 105 of performing electrolysis using the third zinc-containing aqueous solution 15 or the solution 11 obtained by purifying the third zinc-containing aqueous solution 15 as an electrolyte to obtain the electrolytic zinc 13. Therefore, the electrolytic zinc 13 with mixing of impurities reduced can stably be recovered with a high yield.

In the zinc recovery method according to the second embodiment, the zinc recovery process includes the zinc carbonate separation process 108 of separating zinc components in the third zinc-containing aqueous solution 15 or in the liquid 11 obtained by purifying the third zinc-containing aqueous solution 15 as the zinc carbonate 21. Therefore, the zinc carbonate 21 with mixing of impurities reduced can stably be recovered with a high yield.

In the zinc recovery methods according to the first to third embodiments, sodium hydroxide and zinc are left in the tailing electrolyte 14 of the electrowinning process 105. The tailing electrolyte 14 with the sodium hydroxide and the zinc left therein is then subjected to evaporation of water, is placed in a molten state, and in the alkali fusion process 102, is brought into contact with the material 1 or the processed material 3, 16, or 18. Therefore, in a mode in which the amount of consumption of sodium hydroxide is reduced, the electrolytic zinc 13 with mixing of impurities reduced can stably be recovered with a high yield.

In the present invention, the shapes, arrangements, numbers, and the like of constituent elements are not limited to those described in the above embodiments, and it is needless to mention that changes can be appropriately made without departing from the scope of the invention, such as appropriately replacing these constituent elements with other members having equivalent operational effects.

### INDUSTRIAL APPLICABILITY

As described above, the present invention can provide a zinc recovery method that can recover zinc contained in electric arc furnace dust or the like while surely decomposing zinc ferrite contained in the electric arc furnace dust or the like. Therefore, the present invention is expected to be broadly applicable to a zinc recovery method using, as amaterial, primary dust or secondary dust, for example, electric arc furnace dust generated at the time of melting and smelting of scraps in electric furnace steelmaking being one of iron and steel making processes, as well as blast furnace dust, blast furnace and converter dust, or RHF (Rotary Hearth Furnace) dust, roasted ore for zinc concentrate, and the like because of its general and versatile property.

### REFERENCE SIGNS LIST

- 1: electric arc furnace dust

- 2: washing solution
- 3: processed electric arc furnace dust
- 4: used washing solution
- 5: sodium hydroxide
- 6: zinc-containing solidified product
- 7: water
- 8: zinc-containing sodium hydroxide aqueous solution
- 9: residues
- 10a: oxidant
- 10b: slaked lime or quicklime
- 10c: metallic zinc
- 11: zinc-containing sodium hydroxide aqueous solution
- 12a: iron
- 12b: silicate, carbonate, and fluorine
- 12c: metal impurity component
- 13: electrolytic zinc
- 14: tailing electrolyte
- 15: zinc-containing sodium hydroxide aqueous solution
- 16: insoluble material
- 18: attached and separated material
- 19: residual separated material
- 21: zinc carbonate
- 22: residual solution
- 101: halogen washing process
- 102: alkali fusion process
- 103: water leaching process
- 104: purifying process
- 105: zinc recovery process
- 105: electrowinning process
- 106: alkali aqueous solution leaching process
- 107: magnetic separation process
- 108: zinc carbonate separation process

## Claims

1. A zinc recovery method comprising:
an alkali fusion step of, at a first temperature equal to or higher than a melting point of sodium hydroxide, bringing a material containing zinc oxide components and zinc ferrite or a processed material obtained by processing the material and molten sodium hydroxide being sodium hydroxide in a molten state into contact with each other to decompose the zinc ferrite contained in the material or the processed material into zinc oxide components and iron oxide components in the molten sodium hydroxide;
a water leaching step of, at a second temperature lower than a boiling point of water, bringing water into contact with sodium hydroxide being the molten sodium hydroxide with a decreased temperature, the zinc oxide components, and the iron oxide components and leaching the zinc oxide components in a sodium hydroxide aqueous solution to obtain a first zinc-containing aqueous solution containing zinc components and an insoluble material containing iron oxide components not dissolved in the sodium hydroxide aqueous solution; and
a zinc recovery step of recovering zinc components derived from the first zinc-containing aqueous solution.

2. The zinc recovery method according to claim 1, wherein at least one of hydrogen peroxide and sodium nitrate as an oxidant or at least one of sodium sulfite, sodium thiosulfate, sodium dithionite, and zinc metal as a reductant is added to the sodium hydroxide in the alkali fusion step.

3. The zinc recovery method according to claim 1 or 2, further comprising a halogen washing step of, prior to the alkali fusion step, washing the material with a sodium hydroxide aqueous solution having a pH value in a range of 8.5 or more and 10.5 or less to wash halogen components contained in the material.

4. The zinc recovery method according to any of claims 1 to 3, further comprising:
a magnetic separation step of, prior to the alkali fusion step, applying magnetic force to the material or the processed material via a magnet and separating a first separated material composed of components attached to the magnet and a second separated material not attached to the magnet from each other in accordance with magnetic strengths of components in the material or the processed material; and
an alkali aqueous solution leaching step, to which the second separated material is sent, of leaching zinc components contained in the second separated material in a sodium hydroxide aqueous solution to selectively extract the zinc components, to obtain a second zinc-containing aqueous solution containing the zinc components, wherein
the first separated material is sent to the alkali fusion step as the processed material, and the zinc ferrite in the first separated material is decomposed into the zinc oxide components and the iron oxide components.

5. The zinc recovery method according to any of claims 1 to 3, further comprising a purifying step of purifying the first zinc-containing aqueous solution, wherein the purifying step includes a deironization step of bringing potassium permanganate or hydrogen peroxide as an oxidant into contact with the first zinc-containing aqueous solution to remove solidified iron, a desiliconization, carbonate removal, and defluorination step of bringing slaked lime or quicklime into contact with the first zinc-containing aqueous solution from which the iron has been removed to remove silicate, carbonate, and fluorine each of which has been solidified, and a cementation step of bringing metal zinc into contact with the first zinc-containing aqueous solution from which the iron, the silicate, the carbonate, and the fluorine have been removed to reduce and deposit metal impurity components nobler than zinc and remove the metal impurity components.

6. The zinc recovery method according to claim 5, wherein the zinc recovery step includes an electrowinning step of performing electrolysis using, as an electrolyte, the first zinc-containing aqueous solution or the first zinc-containing aqueous solution purifiedto obtain electrolytic zinc.

7. The zinc recovery method according to claim 5, wherein the zinc recovery step includes a zinc carbonate separating step of separating zinc components in the first zinc-containing aqueous solution or the first zinc-containing aqueous solution purified, as zinc carbonate.

8. The zinc recovery method according to claim 4, further comprising a purification step of purifying the second zinc-containing aqueous solution, wherein the purifying step includes a deironization step of bringing potassium permanganate or hydrogen peroxide as an oxidant into contact with the second zinc-containing aqueous solution to remove solidified iron, a desiliconization, carbonate removal, and defluorination step of bringing slaked lime or quicklime into contact with the second zinc-containing aqueous solution from which the iron has been removed to remove silicate, carbonate, and fluorine each of which has been solidified, and a cementation step of bringing metal zinc into contact with the second zinc-containing aqueous solution from which the iron, the silicate, the carbonate, and the fluorine have been removed to reduce and deposit metal impurity components nobler than zinc and remove the metal impurity components.

9. The zinc recovery method according to claim 8, wherein the zinc recovery step includes an electrowinning step of performing electrolysis using, as an electrolyte, the second zinc-containing aqueous solution or the second zinc-containing aqueous solution purified to obtain electrolytic zinc.

10. The zinc recovery method according to claim 8, wherein the zinc recovery step includes a zinc carbonate separating step of separating zinc components in the second zinc-containing aqueous solution or the second zinc-containing aqueous solution purified, as zinc carbonate.

11. The zinc recovery method according to claim 1 or 2, further comprising an alkali aqueous solution leaching step of, prior to the alkali fusion step, bringing the material or the processed material into contact with a sodium hydroxide aqueous solution and leaching zinc components contained in the material or the processed material in the sodium hydroxide aqueous solution to selectively extract the zinc components, to obtain a third zinc-containing aqueous solution containing the zinc components and an insoluble material containing zinc ferrite not dissolved in the sodium hydroxide aqueous solution, wherein
the insoluble material containing the zinc ferrite is sent to the alkali fusion step as the processed material, decomposed into zinc oxide components and iron oxide components, and
in the water leaching step, the zinc oxide components are dissolved in the sodium hydroxide aqueous solution to obtain a fourth zinc-containing aqueous solution containing zinc components.

12. The zinc recovery method according to claim 11, wherein the fourth zinc-containing aqueous solution is sent to the alkali aqueous solution leaching step, and zinc components contained in the fourth zinc-containing aqueous solution are selectively extracted and become a part of the third zinc-containing aqueous solution.

13. The zinc recovery method according to claim 11 or 12, further comprising a halogen washing step of, prior to the alkali aqueous solution leaching step, washing the material with a sodium hydroxide aqueous solution having a pH value in a range of 8.5 or more and 10.5 or less to wash halogen components contained in the material and obtain a processed material.

14. The zinc recovery method according to any of claims 11 to 13, further comprising a purifying step of purifying the third zinc-containing aqueous solution, wherein the purifying step includes a deironization step of bringing potassium permanganate or hydrogen peroxide as an oxidant into contact with the third zinc-containing aqueous solution to remove solidified iron, a desiliconization, carbonate removal, and defluorination step of bringing slaked lime or quicklime into contact with the third zinc-containing aqueous solution from which the iron has been removed to remove silicate, carbonate, and fluorine each of which has been solidified, and a cementation step of bringing metal zinc into contact with the third zinc-containing aqueous solution from which the iron, the silicate, the carbonate, and the fluorine have been removed to reduce and deposit metal impurity components nobler than zinc and remove the metal impurity components.

15. The zinc recovery method according to claim 14, wherein the zinc recovery step includes an electrowinning step of performing electrolysis using, as an electrolyte, the third zinc-containing aqueous solution or the third zinc-containing aqueous solution purified to obtain electrolytic zinc.

16. The zinc recovery method according to claim 14, wherein the zinc recovery step includes a zinc carbonate separating step of separating zinc components in the third zinc-containing aqueous solution or the third zinc-containing aqueous solution purifying, as zinc carbonate.

17. The zinc recovery method according to claim 6, 9, or 15, wherein sodium hydroxide and zinc are left in a tailing electrolyte of the electrowinning step, and the tailing electrolyte with the sodium hydroxide and the zinc left therein is subjected to evaporation of water, is then placed in a molten state, and is bright into contact with the material or the processed material in the alkali fusion step.
